# EUROPEAN PATENT SPECIFICATION

(11) **EP 4 121 646 B1**
(45) Date of publication and mention of the grant of the patent: **02.09.2026**
(21) Application number: 21718649.3
(22) Date of filing: 19.03.2021
(51) Int. Cl.: F03B 3/12, F03B 13/14

(54) **MULTI-BLADE TURBINE WITH HIGH-EFFICIENCY AERODYNAMIC AND HYDRODYNAMIC PROFILE**
TURBINE MIT MEHREREN SCHAUFELN UND HOHEM WIRKUNGSGRAD AN AERODYNAMISCHEM UND HYDRODYNAMISCHEM PROFIL
TURBINE À AUBES MULTIPLES AYANT UN PROFIL AÉRODYNAMIQUE ET HYDRODYNAMIQUE ÉLEVÉ

(30) Priority: 19.03.2020 IT 202000005911
(43) Date of publication of application: 25.01.2023
(73) Proprietor: AIDA SRL, 62100 Macerata (MC) (IT)
(72) Inventor: LUCIANI, Artemio, 62012 Civitanova Marche (MC) (IT)
(74) Representative: Baldi, Claudio
(86) International application number: PCT/IB2021/052315
(87) International publication number: WO 2021/186405

(56) References cited:
- CN-A- 110 439 724
- FR-A1- 2 564 150
- GB-A- 2 555 374
- US-B1- 6 309 172

## Description

### Field of the invention

The present invention relates to the field of turbines, in particular to the field of turbines for the production of energy, typically electric energy, from renewable sources. The preferred, but not exclusive, field of the present invention is the field of energy production in the OWC, i.e. oscillating wave column, field.

### Prior art

In this field, a turbine is placed inside a conduit, in which the wave motion causes a periodic pressure and depression above the same water. In other words, a water column placed inside this conduit and fluidically connected to a (typically marine) water reservoir in which a wave motion occurs, alternately rises and falls along such conduit. The air above this water column alternately travels through the conduit, thus causing the rotation of the turbine.

It is particularly noticeable how the turbine in the OWC field operates with a fluid that alternately changes its direction. Such a turbine is known for example from US6309172B1. Therefore, turbines are known to have complex valve systems to ensure a one-way flow against the impeller of the respective turbine. Alternatively, turbines with symmetrical blades, e.g. the Wells turbine, are known to be used.

These systems are complex and/or have a non-high efficiency.

It is therefore an object of the present invention to provide a turbine which has high efficiency, which can possibly be used in various fields, both with a fluid flow having constant direction and with a fluid flow having alternating direction (such as e.g. in the OWC field).

These and other objects are solved by the present invention as described below.

### Summary of the invention

In particular, the present invention relates to a turbine as defined by the appended claim 1.

The body is preferably planar, or anyway provided with a substantially smaller size than the other two. The body therefore preferably has a surface arranged substantially perpendicular to the axis of rotation of the impeller. The blades protrude from such surface.

The inlet and outlet of the fluid from the impeller are substantially radial, i.e. the fluid entering the impeller has a radial component greater than the axial component, with respect to the axis of rotation of the impeller. The axial component is on average much smaller, preferably less than half, more preferably less than a quarter, of the radial component of the velocity of the fluid entering the impeller. The same applies to the fluid leaving the impeller.

It should be noted that the second and third circumferences are built by choosing the axis of rotation as a centre, and are circumferences that respectively pass through the closest and furthest points of the section with respect to the axis of rotation, regardless of the shape of the section of the blade.

According to a preferred aspect, the fluid inlet and outlet into the impeller are arranged at the blades. Inlet and outlet are preferably substantially distal to the axis of rotation of the impeller.

The blades are typically shaped as an aerodynamic airfoil having the leading edge thicker than the trailing edge and having a distance from the centre of rotation greater than the distance between trailing edge and centre of rotation.

It should be noted that here and hereinafter, irrespective of the shape of the section of the blades, reference will be made to typical concepts of aerodynamic airfoils, such as e.g. "leading edge", "trailing edge", "chord", "camber line", which are known to the person skilled in the art and which the person skilled in the art can apply to the aerodynamic shape of the blades of the present turbine. These concepts are discussed for example in EP3138995B1 in the name of Rolls-Royce, EP3330614B1 in the name of Ansaldo Energia and EP3401211B1 in the name of Bell Helicopter.

It should also be noted that the thickness of the airfoil is known to be measured both in the direction perpendicular to the chord and in the direction perpendicular to the camber line. Since the area of greatest profile thickness measured with both conventions substantially coincides, the second convention, i.e. the thickness measured perpendicularly to the camber line, will be used in this discussion. This thickness is measured on the plane of the section being considered, i.e. a plane perpendicular to the axis of rotation of the impeller. The thickness is outside the first circumference if the point of the camber line, which crosses the straight line on which the thickness is measured, is outside the first circumference.

According to a possible aspect, the average thickness of the blade between the first and third circumferences is greater than the average thickness of the blade between the first and second circumferences. The average thickness can be calculated in a manner known to those skilled in the art, for example by using the integral calculus. According to a possible aspect, the radius of the second circumference is at least 50% of the radius of the third circumference, preferably at least 65%. Typically, in idle condition, the blades have an aerodynamic chord in an essentially radial direction with respect to the axis of rotation of the impeller. The length of the aerodynamic chord is therefore typically less than 50%, preferably less than 35%, of the radius of the third circumference.

According to a possible aspect, the turbine comprises a plurality of conveyors arranged at least upstream of the impeller. These conveyors are typically shaped so as to direct a fluid with the desired angle of attack against the blades of the impeller. It should be noted that, in case of installation at a fluid having reciprocating motion, for example in the OWC field, there are conveyors upstream of the impeller for both directions of the fluid; in other words, in this condition, there are conveyors arranged between each other distally from each other with respect to the impeller. However, embodiments are possible in which the turbine is used with a fluid having a substantially constant direction of motion (except for normal fluctuations in fluid motion), in which conveyors are also present downstream of the impeller, so as to direct also the fluid leaving the turbine.

According to a possible aspect of the present invention, the conveyors are converging with respect to a centripetal direction with respect to said axis of rotation. In other words, the conveyors are arranged so as to accelerate the fluid entering the impeller. According to a possible aspect, at least part of the conveyors is movable, so that the angle of attack of the flow against the blades can be varied. Preferably, part of the conveyors can be moved along a plane substantially perpendicular to the axis of rotation. In other words, by considering the velocity of movement of the conveyors, such velocity has a component arranged on a plane perpendicular to the axis of rotation of the impeller. According to a preferred aspect, such movable conveyors can be rotated at least around an axis parallel to the axis of rotation of the impeller, i.e. perpendicular to a plane in turn perpendicular to the axis of rotation of the impeller. According to a possible aspect, the turbine has variable flow rate. Preferably, the turbine comprises a cylinder movable in an axial direction with respect to the axis of rotation so as to vary the quantity of fluid which passes through the impeller. According to a possible aspect, the impeller comprises at least two series of blades, which are separated by a dividing element that is substantially planar and arranged substantially perpendicular to the axis of rotation of the impeller.

According to a possible aspect, the impeller comprises at least two series of blades, that are separated one from the other via a dividing element, that is substantially planar and that is substantially perpendicular to the axis of rotation of the impeller. According to a possible aspect, the stagger angle of the blades is variable in use, preferably by means of elastic elements.

According to a possible aspect, a surface of the blades has a plurality of grooves, notches, protrusions or dimples. Preferably, the blades are shaped as a non-symmetrical airfoil, so as to have a concave surface and a convex surface. The grooves, notches, protrusions or dimples (as known in the art) are arranged on the convex surface.

These elements cause turbulence at the surface of the blades. In addition, due to the Coanda effect, the fluid flow is forced to follow the surface of the blade for a length greater than a smooth surface. These effects contribute to delaying the separation of the boundary layer from the blade, thus improving the fluid dynamic efficiency of the same.

According to a possible aspect, in addition or alternatively, the conveyors can be provided with elements adapted for inducing turbulence and arranged on a surface, in particular elements preferably selected from notches, protrusions and dimples, which are arranged on at least one of the surfaces of the conveyors.

A further object of the present invention is a turbine comprising an impeller rotatable around an axis of rotation, the impeller comprising a body and a plurality of blades which protrude from the body along a direction substantially parallel (but not necessarily parallel) to the axis of rotation, wherein at least part of the blades, preferably all the blades, comprises a convex surface equipped with grooves, or notches, dimples or protrusions (bosses).

The surface in question is "convex", by not taking these elements into consideration, i.e. grooves, or notches, dimples or protrusions (bosses).

Typically, grooves or notches, dimples or protrusions (bosses) are arranged at the surface known in the art as the upper surface, or extrados, or suction surface of the blade.

A further object of the present invention relates to a plant according to claim 14, i.e. a plant comprising a turbine as discussed above.

### Brief description of the figures

Further characteristics and advantages of the present invention will become clearer from the following description made only by way of non-limiting example, with reference to the accompanying drawings, wherein:
- figure 1 is a schematic sectional view of a turbine according to an embodiment of the present invention;
- figures 2A and 2B are perspective views of the impeller of the turbine of figure 1, in which the body covering the turbine blades has been omitted in figure 2B;
- figure 3 is a view of the impeller of the turbine of figure 1;
- figure 4 is an enlarged view of details of figure 3;
- figure 4A is a schematic view of a blade of the turbine of figure 1;
- figure 5 is a schematic view of a blade in which various possible elements adapted to promote a turbulent boundary layer at these elements of the blade are schematically shown;
- figure 6 is a schematic view of a possible installation of a turbine according to a possible embodiment of the present invention;
- figures 6A and 6B are schematic front and side views of a turbine according to a possible embodiment, in which the distances between the impeller and the pipe of a turbine according to a possible embodiment of the present invention are shown; these distances, for ease of viewing, are exaggerated and therefore not to scale;
- figure 7 is a variant of an impeller, according to a possible aspect of the present invention, equipped with multiple series of blades;

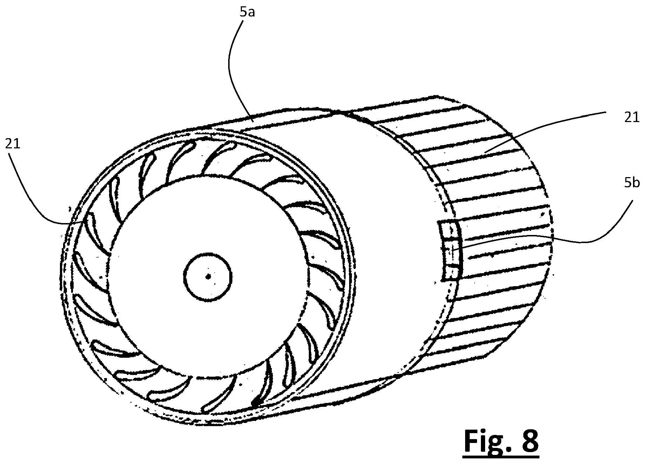

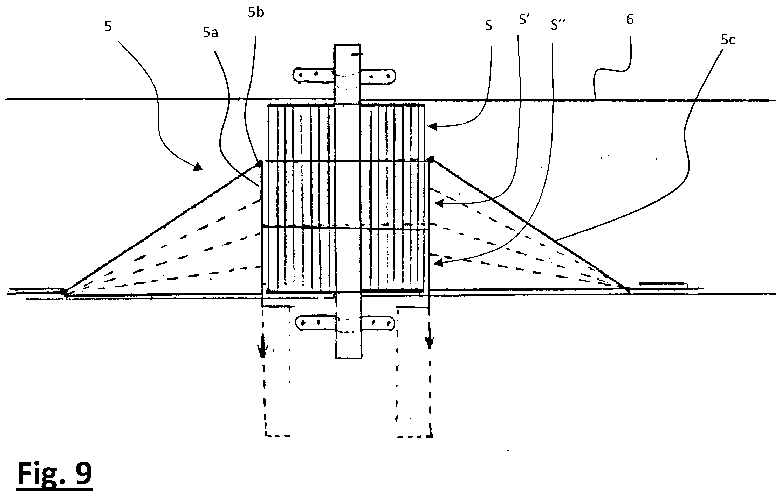

- figures 8 and 9 are respectively perspective and plan views of a turbine with impeller of figure 7, which is equipped with variable flow rate;
- figures 10A and 10B are schematic views of a possible installation of the turbine of figure 1.

### Detailed description of the figures

With reference to the embodiments shown in the figures, a turbine 1 comprises an impeller 2 rotatable around an axis of rotation A.

The impeller 2 is typically arranged so that fluid inlet and outlet in and from the impeller 2 are arranged in a substantially radial manner with respect to the axis of rotation A. The present turbine 1, unlike the conventional radial turbines, which have an axial fluid inlet and a radial outlet, has both an inlet and an outlet which are arranged in a substantially radial manner.

Fluid inlet and outlet are typically arranged distally with respect to the axis of rotation A.

In possible embodiments, such as those shown in the accompanying figures, the impeller comprises a pin 23 arranged at the axis of rotation A and integral with the body 20. Typically, an alternator is connected to such pin 23, for producing energy. Moreover, the pin 23 facilitates the installation of the turbine 1 at the installation place of the same. The pin 23 does not contribute (or anyway contributes minimally) to the fluid dynamics of the turbine 1 and, in possible alternative embodiments not shown in detail in the figures, could be omitted.

The impeller comprises a body 20 from which a plurality of blades 21 protrude.

The body 20 has a substantially planar shape, i.e. one of the three dimensions being considerably smaller than the other two. The body 20 is typically disc-shaped.

The blades 21 protrude from the body 2, preferably along a dimension substantially parallel to that of the axis of rotation A. In other words, in these embodiments, considering a plane perpendicular to the axis of rotation A, the blades 21 protrude from the body 20 perpendicularly to such plane. More generally, according to a preferred aspect, the body 20 is arranged perpendicularly to the axis A, i.e. it has a surface 20a from which the blades protrude and that is arranged substantially perpendicular to the axis of rotation A.

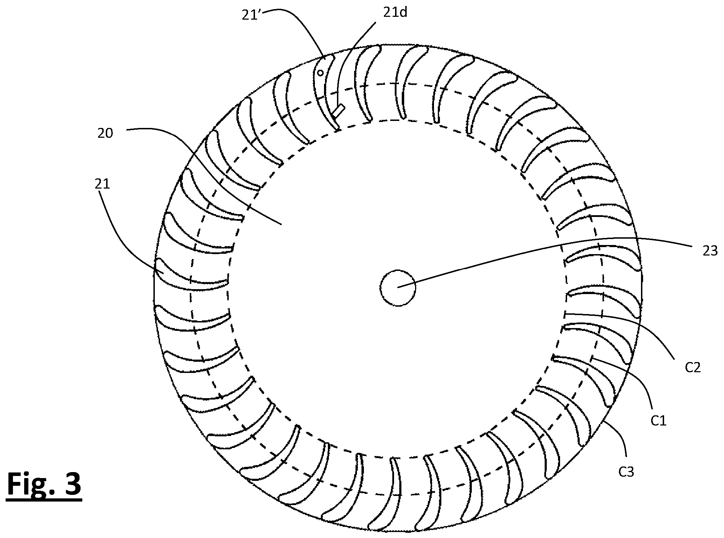

By considering a view on a plane perpendicular to the axis of rotation A, such as e.g. the view of figure 3, the blades 21 are substantially enclosed within the perimeter of the body 20. Preferably, the section of the blade 21 is constant along the axis of rotation A, i.e. it is constant along its own length. In other words, considering two planes perpendicular to the axis of rotation of the impeller and distinct from each other that intersect the blades, the section of the blade on the first plane is substantially identical to that on the second plane. In these preferred embodiments, such equality applies to each pair of distinct planes perpendicular to the axis of rotation A that intersect the blades 21.

According to a preferred aspect, the impeller comprises a second body 22 typically analogous to the body 20, which is arranged distal to the body 20 with respect to the blades 21, so that the blades are arranged between the body 20 and the second body 22.

According to a possible embodiment, the impeller comprises two discs which form the body 20 and the second body 22, parallel to each other, and blades 21 arranged between the body 20 and the second body 22.

The blades 21 may have various shapes and are preferably shaped as an airfoil.

The blades 21 are preferably arranged so that different sections of the turbine 1, which are made along different planes perpendicular to the axis of rotation A (i.e. planes parallel to each other), show a substantially identical shape of the blades 21, i.e. the blades 21 have a substantially constant section along a direction perpendicular to the body 20.

These sections are typically aligned, i.e. the projection of a first section on a second plane coincides with the section of the blade on such plane. However, embodiments are possible in which the section of a blade, on a first plane perpendicular to the axis of rotation A, is identical to the section of the same blade on a second plane perpendicular to the axis of rotation A but is translated and/or rotated with respect to the same. In other words, in possible embodiments, the orthogonal projection of a first section of a blade on a second plane (different from that on which the first section was obtained), is a translation and/or rotation of the section of the blade obtained on such second plane.

According to a preferred aspect, the blades 21 have identical shape, i.e. all blades have the same shape.

By considering a section of a blade 21 along a plane perpendicular to the axis of rotation A, it is possible to draw a first circumference C1 placed intermediately to a second circumference C2 and a third circumference C3.

In particular, the three circumferences C1, C2, C3 are concentric and have the axis of rotation A as a centre.

The second circumference C2 is tangential to the point of the perimeter of the section placed closest to the axis of rotation A (i.e. the circumference tangential to the blade 21 having the smallest radius r2 possible). The third circumference is tangential to the blade 21 (i.e. to the section of the blade 21), at the point of the perimeter of the section of the blade 21 placed farthest from the centre of rotation A (i.e. the circumference tangential to the blade 21 having the greatest radius r3 possible). The first circumference C1 is placed intermediately to the circumferences C2, C3. In other words, the radius r1 of the first circumference C1 is equal to half the sum of the radii r2, r3 of the circumferences C2, C3, so that r1 = 0.5(r2 + r3).

As discussed above, the body 20 is typically disc-shaped. According to a possible aspect, the third circumference C3 corresponds to the perimeter of such disc.

By considering now the camber line CL of the section of the blade 21 and measuring the thickness of the blade 21 perpendicularly to the camber line CL, the maximum thickness MT of the blade can be measured along a straight line (obviously perpendicular to the camber line CL) that intersects the camber line CL at point P which is outside the first circumference C1, i.e. a point P arranged between the first circumference C1 and the third circumference C3.

Preferably, the average thickness of the blade 21 between the first circumference C1 and the third circumference C3 is greater than the average thickness of the blade 21 between the first circumference C1 and the second circumference C2.

The leading edge LE of the blade 21, by considering the direction of the fluid upstream of the turbine 1, is therefore arranged in an area with a greater thickness than the trailing edge TE.

It should be noted that in possible embodiments, such as those shown in the figures, the blades 21 have analogous shape and arrangement. In this case, the circumferences C1, C2 and C3 match for all blades 21. However, it is possible to provide for embodiments in which the circumferences C1, C2 and C3 differ for different blades. Moreover, in case of analogous shape of the blades 21, the condition relative to the position of the maximum thickness MT of the blades 21 applies to all blades 21. As discussed, however, embodiments are possible in which some of the blades differ from each other. In these embodiments, according to the present invention, at least half of the blades meet the condition discussed above. Preferably, even in these embodiments, all blades meet the condition discussed above, relevant to the positioning of the maximum thickness MT of the blade 21.

According to a preferred aspect, the blades 21 do not have a symmetrical profile. In particular, according to a possible aspect, the blades 21 therefore have a substantially convex surface and a substantially concave surface.

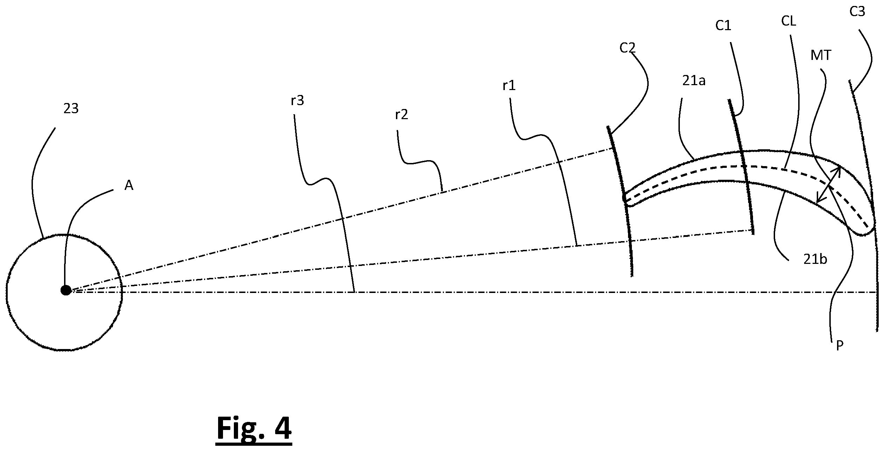

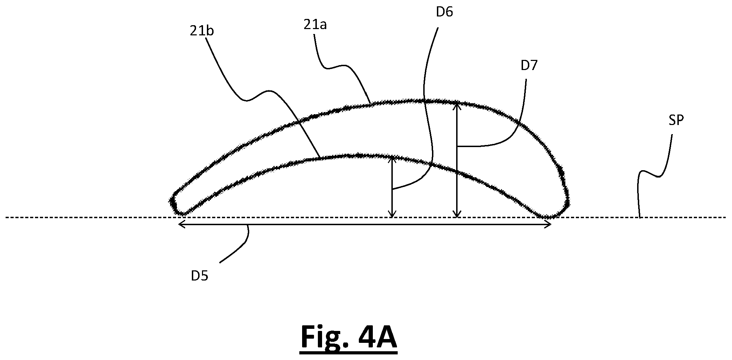

By considering a view of a blade in which the resulting fluid dynamic force is substantially facing upwards (like the view of figure 4), the convex surface 21a is the upper surface of the blade 21, also known in the art as extrados, whereas the concave surface 21b is the lower surface, also known in the art as intrados.

Therefore, the blade 21 preferably has a curvature. One possible method for evaluating curvature is as follows. Consider resting the blade 21 on a surface SP, by resting the concave surface 21b thereon, and consider the distance D5 between the support points of the blade 21 and the surface SP. The maximum distance D6 between the supporting surface SP and the concave surface 21b is preferably equal to 2/11 of D5. Preferred values of this distance D6 are between +20% and -20% of the preferred value. The maximum distance D7 between the convex surface 21a and the supporting surface SP is preferably equal to 2/5 of D5. Further preferred values of this distance D6 are between +20% and -20% of the preferred value.

According to a possible embodiment, the convex surface is not smooth, but it has grooves, notches, dimples or protrusions (bosses). Preferred embodiments provide for dimples, as are known in the art, for example of a type similar to those applied in golf balls. These dimples typically have a substantially circumference-portion shape. Other possible solutions provide for indentations having a shape like a polyhedron portion, for example a parallelepiped portion or longitudinal notches (i.e. perpendicular to the plane in which the camber line CL is present).

In general, the convex surface 21a preferably has elements 21c adapted to promote a turbulent boundary layer at such elements 21c on the convex surface, so as to reduce the fluid-dynamic resistance of the blade 21. As previously discussed, this turbulence at the elements 21c, together with the Coanda effect, contributes to delaying the separation of the boundary layer from the blade and in general contributes, through fluid dynamic effects, to improving the efficiency of the impeller.

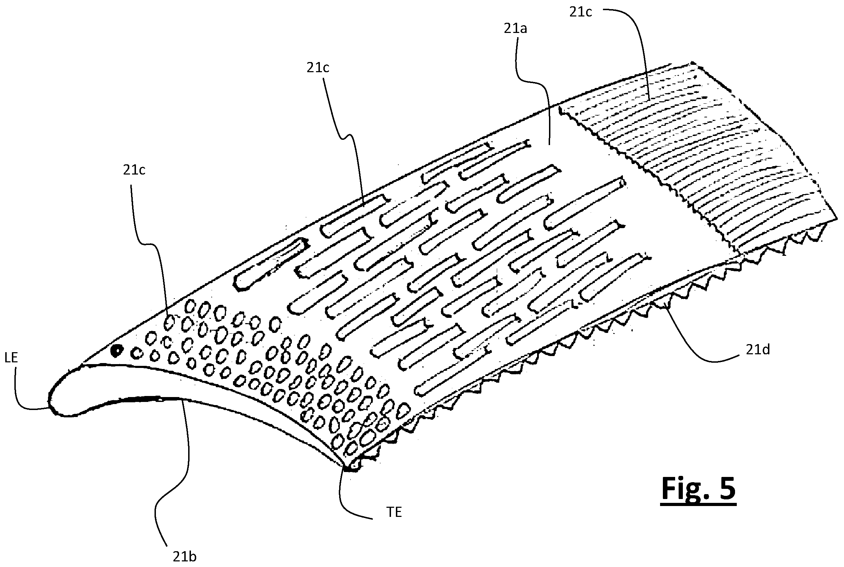

Figure 5 shows different forms of possible elements 21c arranged on the convex surface 21a of the blade 21. Typically, in reality, the blade 21 is equipped with a single type of these elements 21c.

It should be noted that the use of such elements 21c can be advantageous also in embodiments in which the maximum thickness of the blade 21 is not arranged outside the first circumference C1.

According to a further aspect, the trailing edge TE of the profile has protrusions 21d and is preferably jagged or indented.

The blades 21 have a length of the chord, and therefore of the camber line CL, substantially less than the radius of the third circumference C3 and are arranged at the perimeter of the body 20, typically in such a way as to be entirely contained therein. In general, according to a preferred aspect, the radius r2 of the second circumference is equal to at least 50% of the radius r3 of the third circumference C3. Preferably, the radius r2 is equal to at least 65% of the radius r3. In possible embodiments, such as those shown in the figures, the radius r2 is about 70% of the radius r3.

According to possible variants, as shown schematically in figure 3, with reference to blade 21', at least part of the blades can be mounted in a rotatable manner, for example they can be hinged, to the body 20, so that their stagger angle can be varied during use. This adjustment can be active by means of special control devices or, more preferably, passive, for example through elastic elements 21d, preferably one or more springs which offer a certain resistance to the rotation of the blades 21'. In use, therefore, the position of a blade 21' hinged to the body 20 is variable, according to the equilibrium reached between the fluid dynamic forces acting on the blade 21' and the resistance offered by the elastic elements 21d.

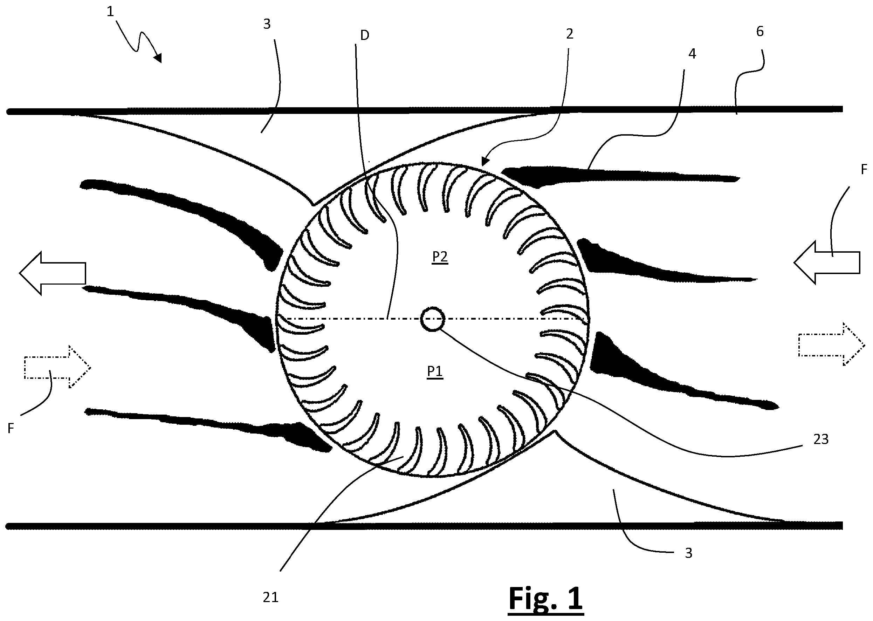

In preferred embodiments, the turbine has conveyors 3, 4 upstream of the turbine 1, which are adapted to direct the fluid with the desired angle of attack against the blades 21 of the impeller 2. For simplicity, two different types of conveyors 3, 4 are defined here. First conveyors 3 can be provided, in addition to adjusting the angle of attack of the fluid against the blades 21, in order to allow the turbine 1 to operate with a fluid which periodically reverses its direction of motion, for example as in the OWC field. These first conveyors 3 are typically arranged at the side portion of the flow that hits the impeller 2, so as to prevent the fluid from hitting part of the blades 21 in order to ensure that the fluid flow against the blades 21 may allow only one direction of rotation of the impeller 2. Typically, with particular reference to figure 1, by considering the two portions P1, P2 of the impeller that are formed by a diameter D of the impeller 2, which is placed on a plane perpendicular to the axis of rotation A and arranged parallel to the direction F of the fluid upstream of the conveyors, a first conveyor 3 is arranged so as to prevent the fluid that meets the impeller 2 from exerting a thrust against the blades arranged furthest from such diameter in one of the two portions P1, P2 of the impeller 2.

It should be noted that in figure 1, arrows having a solid line show the direction of the fluid at a first time and arrows having a dashed line show the direction of the fluid at a second time, in which the fluid has reversed its direction of motion with respect to the first time. Thanks to the presence of the first conveyors 4, the impeller 3 can rotate in the same direction (anticlockwise in figure 1) both at the first time and at the second time.

It should also be noted that, with reference to the diameter D and the portions P1 and P2 of the impeller 2 previously described, the turbine is configured so as to be provided with a first conveyor 3 arranged upstream of the impeller at one of the portions P1 and P2 of the impeller and with a further first conveyor 3 downstream of the impeller arranged at the other portion P2, P1 of the impeller 2. This condition is verified for both directions of motion of the fluid. The first conveyors 3 are therefore typically arranged distally from each other with respect to the axis of rotation A of the impeller 2.

Preferably, the turbine 1 further provides for second conveyors 4 arranged at a shorter distance from the previously discussed diameter D than the first conveyors 3. As discussed, the conveyors 4 are configured to direct the fluid flow against the blades 21 so as to ensure the desired angle of attack of the same with respect to the fluid.

Conveyors 3, 4 are typically configured so as to accelerate the fluid that is directed against the impeller 2, i.e. they are preferably shaped so as to form converging channels upstream of the impeller 2.

At least part of the conveyors 3, 4 (typically at least part of the second conveyors 4) are movable, so that the angle of attack of the flow on the blades 21 of the impeller 2 can be regulated. For example, at least part of the conveyors 3, 4 can be hinged to a respective support so as to be able to rotate around an axis parallel to the axis of rotation A of the impeller 2.

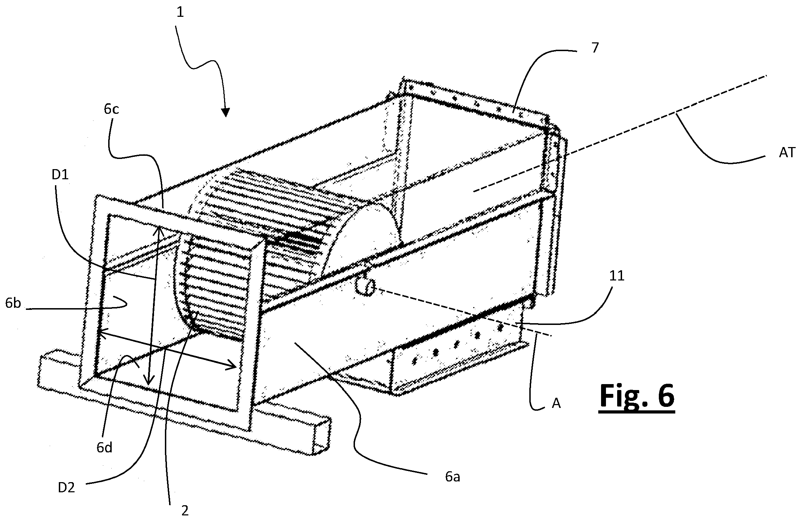

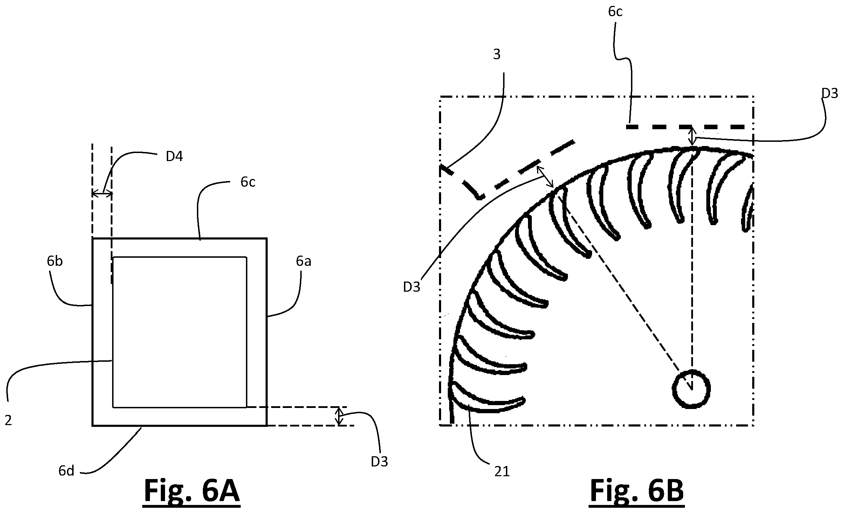

The impeller 2 can be ducted or free. The impeller 2 is typically ducted in case of fluid having reciprocating motion. In other words, according to a possible embodiment, the turbine 1 comprises a pipe 6 and the impeller 2 is inserted within the pipe 6. For example, figures 1 and 6 show embodiments of turbines used in the OWC field. In figure 6, the conveyors 3, 4 have been omitted for ease of viewing.

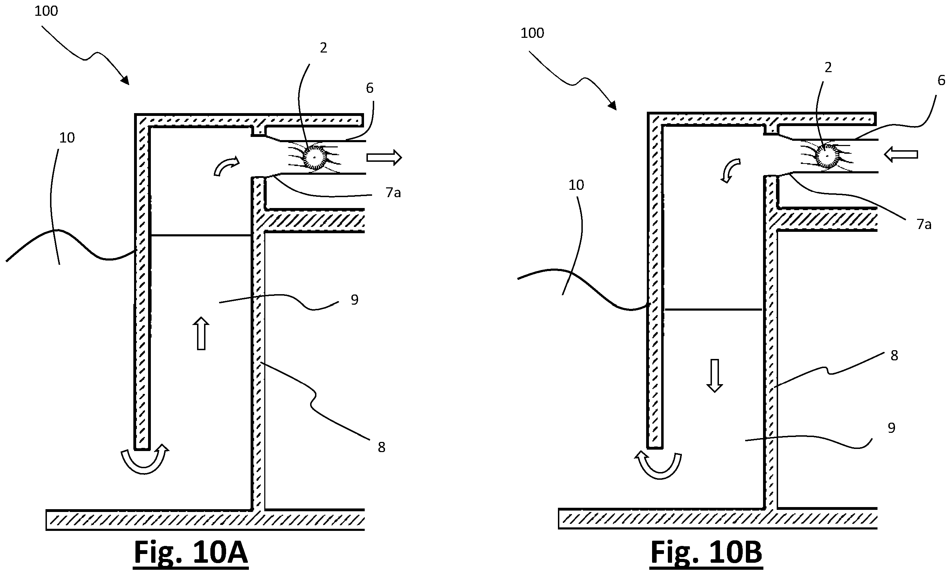

In particular, a possible embodiment of a plant 100 according to an aspect of the present invention is schematically shown in figures 10A and 10B. The plant 100 comprises a substantially vertical conduit 8 fluidically connected to a water reservoir 10, typically fluidically connected to the sea, within which a water column 9 is formed. Such water column 9, as a result of the wave motion of the water reservoir 10, alternately rises and falls, as shown in figures 10A and 10B, respectively. The air arranged in the vertical conduit above the water is then alternately pushed out of such conduit (when the water rises in the vertical conduit) or drawn back into the same (when the water falls in the vertical conduit). An impeller 2 can be installed directly in the vertical conduit. Alternatively, as in figures 6 and 10A - 10B, a pipe 6 is arranged substantially horizontally and is fluidically connected to the mentioned vertical conduit 8, typically at the top of such conduit or anyway at a portion of the vertical conduit 8 which, in normal condition of use, remains arranged above the water column. Therefore, the air is alternately pushed out of, and drawn back into, such horizontal pipe 6 as a result of the movement of the water column 9. A connecting element 7 is typically arranged at one end of the pipe 6, so as to be able to be connected to the vertical conduit 8. According to a possible aspect, such connecting element 7 can comprise an adapter 7a adapted to connect a pipe 6 to a vertical conduit 8 which have different dimensions and/or sections of different shape from each other, for example, a rectangular-section pipe 6 to a round-section vertical conduit 8. This adapter can be shaped so as to reduce the section of the pipe 6 or so as to form a converging portion, by considering an airflow leaving the pipe 6 or at a rising of the water column 9 within the vertical conduit 6.

Typically, the pipe 6 has rectangular section having two walls 6a, 6b opposite each other and substantially perpendicular to the axis of rotation A of the impeller 2, and two walls 6c, 6d opposite each other and substantially parallel to the axis of rotation A. As will be apparent to the person skilled in the art, a square-section pipe is a particular embodiment of a rectangular-section pipe.

The distances D1, D2 between opposite walls of the pipe are preferably constant along the length of the pipe 6 (i.e. the direction coinciding with the direction of motion of the fluid within the pipe 6), although embodiments in which such distances D1, D2 may vary along the length of the pipe are not excluded. These distances remain non-null for the entire length of the pipe, so that at the ends of the pipe 6, two openings, through which the fluid can enter and exit from the pipe 6, are formed.

The pipe 6 and the impeller 2 are preferably shaped so as to substantially intercept the totality of the fluid flow that travels through the pipe 6.

In this regard, the minimum distance D3 between the pipe 6 and the impeller 2 (or other element of the turbine 1 connected thereto and different from the pipe 6), which is measured in a radial direction with respect to the axis of rotation A, is preferably less than 2 cm, more preferably less than 1 cm, even more preferably less than 0.5 cm. Also the minimum distance D4 between the pipe 6 and the impeller 2 (or other element of the turbine 1 connected thereto and different from the pipe 6), which is measured in the axial direction to the axis of rotation A, is typically less than is preferably less than 2 cm, more preferably less than 1 cm, even more preferably less than 0.5 cm.

It should be noted that the minimum distance D3 in the radial direction (i.e. the minimum value that such distance takes among all radial directions) can be measured with respect to a wall 6c, 6d of the pipe, or with respect to a conveyor 3 constrained to such wall so that, in the radial direction along which the distance D3 is measured, there is no gap between the conveyor 3 and the wall 6c, 6d of the pipe 6.

Preferably, therefore, by considering the area A1 of the section of the pipe 6 along a plane perpendicular to the direction of motion of the fluid and passing through the axis of rotation of the impeller, and the area A2 inside the pipe between the impeller 2 and the pipe 6, in which the fluid can pass by bypassing the impeller 2, which is measured on a plane comprising the axis of rotation A and the radial direction along which the minimum distance D3 is measured, the value of A2 is at least 10 times less than the value of A1. In the simplified form shown in figure 6A, in which no conveyors 3 are present, the value of A1 is the area of the pipe section, whereas the value of A2 is the area of the sector between the pipe 6 and the impeller 2.

According to a preferred aspect, the pipe 6 comprises a vent element 11 adapted to eject the air in the pipe 6 in case of emergency. In particular, this vent element is arranged upstream of the impeller 2 (by considering the direction of motion of the air when it exits the pipe 6, typically at the rise of the water column 9) and typically has one or more valves not shown in detail. These valves are normally closed during normal operations of the turbine 1. In case of emergency, for example in case of blockage of the impeller 2, the vent element 11 can be operated so as to allow the air to escape from the pipe 6, for example by opening the respective valves, thus preventing the pressure inside the pipe 6 from excessively rising.

It should be noted that typically the direction of motion of a fluid within the pipe 6 typically coincides with, or anyway is parallel to, the axis AT of the same pipe, which is therefore arranged perpendicularly to the axis of rotation A of the impeller 2.

The turbine 1 can be used with gases and liquids, i.e. typically air and water. The turbine 1 can therefore be used, for example, within a pipe 6 fluidically connected to a vertical conduit 8 within which a water column 9 rises and falls, so as to be hit by the air fluid pushed or drawn back by the water movement (the OWC field discussed above) or it can be inserted into a watercourse. This second embodiment can use a free impeller (i.e. without pipe 6) and operate with fluid that does not reverse its own direction of motion (the use of conveyors 3, 4 can therefore be reduced or omitted with respect to the embodiments shown in figures 1 and 6).

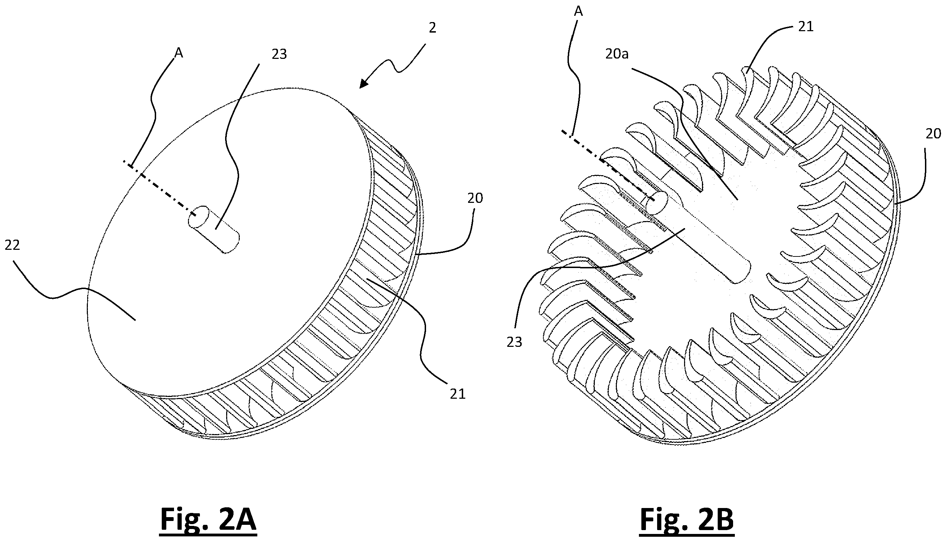

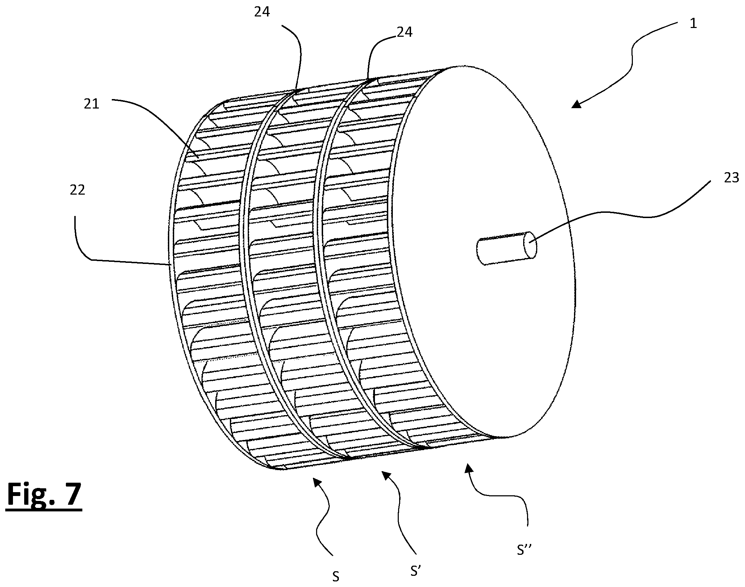

It should be noted that figures 2A and 2B show an impeller 2 equipped with a single series of blades 21. Alternative embodiments, such as the one shown in figure 7, provide for two or more series S, S', S" of blades 21. The different series S, S', S"" of blades 21 are arranged side by side with respect to each other, in the direction of the axis of rotation A, and are typically divided by dividing elements 24. These dividing elements 24 are typically shaped in a manner analogous to the body 20 and the second body 22. The turbine 1 can therefore be made so as to have, along the axis of rotation A, a first disc, a first series of blades which protrude from the first disc, a second disc which rests on the first series of blades distally to the first disc, a second series of blades which protrudes from the second disc, a third disc which rests on the second series of blades distally to the second disc, etc.

In general, the turbine 1 can be configured so as to have two or more series of blades arranged in succession along the axis of rotation A.

The series of blades S, S', S'' typically have blades that are misaligned from each other. Preferred embodiments have series of blades S, S', S" having blades 21 that are identical and misaligned from each other. In this case, therefore, a series of blades (for example, the second series S") is arranged so as to coincide with an adjacent series of blades (for example, the first series S) after the latter has been translated along the axis A' and subsequently rotated with respect to the axis of rotation A.

According to possible embodiments, preferably but not exclusively those equipped with several series S, S', S" of blades 21, the turbine has a device 5 for varying the flow rate of fluid that interacts with the turbine 1.

A preferred embodiment of such device 5 comprises a cylinder 5a movable axially with respect to the axis of rotation A, so that the impeller 2 can be covered at least partially. In particular, by moving this cylinder 5a, it is possible to vary the quantity of impeller covered by such cylinder. In preferred embodiments, this cylinder can be movable in several positions adapted to cover a different number of series S, S', S" of blades 21.

The cylinder 5 can therefore slide along the axis A and can be connected by hinges 5b to control elements 5c (typically rods or plates), the movement of which can be controlled electronically or mechanically according to the quantity of fluid that is directed toward the impeller 2. These control elements 5c can also act as conveyors, in addition to or replacement of the conveyors 3, 4 shown in the other embodiments. In addition to, or as an alternative to, the elements 21c arranged on the blades 21, similar elements 21c adapted to promote a turbulent boundary layer may be provided on one or more of the surfaces of the conveyors 3, 4 and/or on the control elements 5c. The behaviour of the turbine 1 in the condition of use is evident to the person skilled in the art in the light of the above description. In short, fluid is directed against the turbine 1 so as to rotate the impeller 2. The kinetic energy of the impeller 2 can be transformed in a known manner into a different form of energy, for example electrical energy by means of an alternator suitably coupled to the turbine 1.

The impeller 2 can also be used in a gas or liquid flow (generally air or water). The turbine can operate with a fluid having substantially constant direction of motion or with a fluid which periodically reverses its direction of travel. In this case, conveyors 3, 4 are typically provided to contribute to keeping the direction of rotation of the impeller 2 constant, irrespective of the direction of travel of the fluid that hits the impeller 2.

## Claims

1. Turbine (1) comprising an impeller (2) rotatable around an axis of rotation (A), the impeller (2) comprising a body, and a plurality of blades (21), which protrude from said body, preferably from a surface (20a) of said body arranged substantially orthogonal to said axis of rotation (A), wherein for at least part of said blades (21), preferably all said blades (21), it is true that, by considering a section of a blade (21) on a plane perpendicular to the axis of rotation (A), the maximum thickness (MT) of said section is placed outside a first circumference (C1) drawn on said plane, placed intermediately between a second circumference (C2) tangential to the point of said section closest to said axis of rotation (A), and having said axis of rotation (A) as a centre, and a third circumference (C3), concentric to said second circumference (C2) and tangential to the point of said section farthest from said axis of rotation (A), the three circumferences (C1, C2, C3) being concentric and having the axis of rotation (A) as a centre, **characterised in that** the turbine comprises a pipe (6), and the impeller (2) is arranged within the pipe (6), said pipe (6) having an axis (AT) arranged perpendicularly to the axis of rotation (A) of the impeller (2), wherein the turbine is configured so that the fluid inlet and outlet from the impeller (2) are substantially radial.

2. Turbine (1) according to claim 1, wherein the average thickness of said blade (21) between said first circumference (C1) and third circumference (C3) is greater than the average thickness of said blade (21) between said first circumference (C1) and said second circumference (C2).

3. Turbine (1) according to claim 1 or 2, wherein the radius (r2) of said second circumference (C2) is at least 50% of the radius (r3) of said third circumference (C3), preferably at least 65%.

4. Turbine (1) according to one of the preceding claims, wherein, by considering:
• A1 as the area of the section of the pipe (6) along a plane perpendicular to the direction of motion of the fluid and passing through the axis of rotation of the impeller (2),
• A2 as the area inside the pipe between the impeller (2) and the pipe (6), in which fluid can pass by bypassing the impeller (2), measured on a plane comprising the axis of rotation (A) and the radial direction along which the minimum distance (D3) between the pipe (6), or a conveyor (3) connected to the pipe (6), and the impeller (2) can be measured,
the value of A2 is at least 10 times less than the value of A1.

5. Turbine (1) according to one of the preceding claims, comprising a plurality of conveyors (3, 4) arranged at least upstream of the impeller (2), wherein said conveyors (3, 4) are preferably converging so as to accelerate the inlet fluid entering said impeller (2) and/or are preferably movable.

6. Turbine (1) according to one of the preceding claims, wherein the turbine (1) has variable flow rate, preferably comprising a cylinder (5) movable in an axial direction with respect to said axis of rotation (A), so that the impeller can be covered at least partially in order to vary the quantity of fluid which passes through said turbine (1).

7. Turbine (1) according to one of the preceding claims, wherein said impeller (2) comprises at least two series (S, S', S") of blades (21), which are separated by a dividing element (24) substantially planar and arranged substantially perpendicular to said axis of rotation (A).

8. Turbine (1) according to one of the preceding claims, wherein the stagger angle of said blades (21') is variable in use, preferably by means of elastic elements (21d).

9. Turbine (1) according to one of the preceding claims, wherein a surface of the blades (21) has a plurality of grooves, or notches, or protrusions, or dimples (21c).

10. Turbine (1) according to one of the preceding claims, wherein said pipe has a substantially rectangular section.

11. Turbine (1) according to any preceding claim, comprising a vent element (11) adapted to eject the air in the pipe (6) and arranged upstream of the impeller (2), by considering at least one direction of travel in which a fluid flows in the pipe (6) in condition of use.

12. Plant (100) comprising a conduit (8) which, in use, is arranged substantially vertically and is fluidically connected to a water source (10) so as to form a water column (9) within said vertical conduit which alternately rises and falls within said vertical conduit (8), said plant comprising a turbine (1) according to one of the preceding claims, which is arranged in said vertical conduit (8) above such water column, or which is arranged substantially horizontally and is fluidically connected to said vertical conduit (8).

13. Plant (100) according to claim 12, comprising an adapter (7a) adapted to connect the pipe (6) to the vertical conduit (8), preferably shaped so as to reduce the section of the pipe (6) by forming a converging portion.

## Patentansprüche

1. Turbine (1), umfassend ein Laufrad (2), das um eine Drehachse (A) drehbar ist, wobei das Laufrad (2) ein Gehäuse und eine Vielzahl von Schaufeln (21) umfasst, die aus dem Gehäuse, vorzugsweise aus einer im Wesentlichen rechtwinklig zur Drehachse (A) angeordneten Oberfläche (20a) des Gehäuses vorstehen, wobei es mindestens für einen Teil der Schaufeln (21), vorzugsweise für alle Schaufeln (21), zutrifft, dass unter Berücksichtigung eines Querschnitts einer Schaufel (21) auf einer Ebene, die senkrecht zur Drehachse (A) ist, die maximale Dicke (MT) des Querschnitts sich außerhalb eines ersten Umfangs (C1) befindet, der auf der Ebene gezeichnet ist, zwischen einem zweiten Umfang (C2), tangential zu dem Punkt des Querschnitts, der der Drehachse (A) am nächsten liegt und die Drehachse (A) als Mittelpunkt aufweist, und einem dritten Umfang C3), konzentrisch zu dem zweiten Umfang (C2) und tangential zu dem Punkt des Querschnitts, der am weitesten von der Drehachse (A) entfernt liegt, wobei die drei Umfänge (C1, C2, C3) konzentrisch sind und die Drehachse (A) als Mittelpunkt aufweisen, **dadurch gekennzeichnet, dass**
die Turbine ein Rohr (6) umfasst und das Laufrad (2)
innerhalb des Rohrs (6) angeordnet ist, wobei das Rohr (6) eine Achse (AT) aufweist, die senkrecht zur Drehachse (A) des Laufrads (2) angeordnet ist, wobei die Turbine so konfiguriert ist, dass der Fluideintritt und der Fluidaustritt aus dem Laufrad (2) im Wesentlichen radial sind.

2. Turbine (1) nach Anspruch 1, wobei die durchschnittliche Dicke der Schaufel (21) zwischen dem ersten Umfang (C1) und dem dritten Umfang (C3) größer ist als die durchschnittliche Dicke der Schaufel (21) zwischen dem ersten Umfang (C1) und dem zweiten Umfang (C2).

3. Turbine (1) nach Anspruch 1 oder 2, wobei der Radius (r2) des zweiten Umfangs (C2) mindestens 50 %, vorzugsweise mindestens 65 % des Radius (r3) des dritten Umfangs (C3) beträgt.

4. Turbine (1) nach einem der vorstehenden Ansprüche, wobei unter Berücksichtigung von:
• A1 als die Fläche des Querschnitts des Rohrs (6) entlang einer Ebene senkrecht zur Bewegungsrichtung des Fluids und durch die Drehachse des Laufrads (2) hindurchgehend,
• A2 als die Fläche innerhalb des Rohrs zwischen dem Laufrad (2) und dem Rohr (6), durch das das Fluid unter Umgehung des Laufrads (2) hindurchgehen kann, gemessen auf einer Ebene, umfassend die Drehachse und die Radialrichtung, entlang der der Mindestabstand (D3) zwischen dem Rohr (6), oder einem mit dem Rohr (6) verbundenen Förderer (3), und dem Laufrad (2) gemessen werden kann,
der Wert von A2 mindestens 10-mal kleiner ist als der Wert von A1.

5. Turbine (1) nach einem der vorstehenden Ansprüche, umfassend eine Vielzahl von Förderern (3, 4), die mindestens stromaufwärts des Laufrads (2) angeordnet sind, wobei die Förderer (3, 4) vorzugsweise konvergierend sind, um das in das Laufrad (2) eintretende Fluid zu beschleunigen, und/oder vorzugsweise beweglich sind.

6. Turbine (1) nach einem der vorstehenden Ansprüche, wobei die Turbine (1) eine variable Durchflussrate aufweist, vorzugsweise einen Zylinder (5) umfasst, der in eine axiale Richtung in Bezug auf die Drehachse (A) beweglich ist, so dass das Laufrad mindestens teilweise bedeckt werden kann, um die Fluidmenge, die durch die Turbine (1) strömt, zu variieren.

7. Turbine (1) nach einem der vorstehenden Ansprüche, wobei das Laufrad (2) mindestens zwei Reihen (S, S', S") von Schaufeln (21) umfasst, die durch ein Trennelement (24) getrennt sind, das im Wesentlichen eben ist und im Wesentlichen senkrecht zur Drehachse (A) angeordnet ist.

8. Turbine (1) nach einem der vorstehenden Ansprüche, wobei der Versatzwinkel der Schaufeln (21') im Gebrauch variierbar ist, vorzugsweise mittels elastischer Elemente.

9. Turbine (1) nach einem der vorstehenden Ansprüche, wobei die Oberfläche der Schaufeln (21) eine Vielzahl von Rillen, oder Kerben, oder Vorwölbungen, oder Vertiefungen (21c) aufweist.

10. Turbine (1) nach einem der vorstehenden Ansprüche, wobei das Rohr einen im Wesentlichen rechteckigen Querschnitt aufweist.

11. Turbine (1) nach einem der vorstehenden Ansprüche, umfassend ein Entlüftungselement (11), das dazu geeignet ist, die im Rohr (6) befindliche Luft auszustoßen, und das - unter Berücksichtigung mindestens einer Strömungsrichtung, in der im Gebrauchszustand ein Fluid im Rohr (6) strömt - stromaufwärts des Laufrads (2) angeordnet ist.

12. Anlage (100), umfassend eine Leitung (8), die im Gebrauch im Wesentlichen vertikal angeordnet ist und fluidisch mit einer Wasserquelle (10) verbunden ist, um eine Wassersäule (9) in der vertikalen Leitung zu bilden, die in der vertikalen Leitung (8) abwechselnd steigt und fällt, wobei die Anlage eine Turbine (1) nach einem der vorstehenden Ansprüche umfasst, die in der vertikalen Leitung (8) über einer derartigen Wassersäule angeordnet ist, oder die im Wesentlichen horizontal angeordnet ist und fluidisch mit der vertikalen Leitung (8) verbunden ist.

13. Anlage (100) nach Anspruch 12, umfassend einen Adapter (7a), der dazu geeignet ist, das Rohr (6) mit der vertikalen Leitung (8) zu verbinden, und der vorzugsweise so geformt ist, dass er den Querschnitt des Rohrs (6) reduziert, indem er einen konvergierenden Abschnitt bildet.

## Revendications

1. Turbine (1) comprenant un rotor (2) pouvant tourner autour d'un axe de rotation (A), le rotor (2) comprenant un corps et une pluralité de pales (21) qui forjettent du susdit corps, de préférence d'une surface (20a) du susdit corps, disposées de façon sensiblement orthogonale par rapport au susdit axe de rotation (A), dans lequel, pour au moins certaines de ces pales (21), de préférence toutes ces pales (21), la condition suivante est vérifiée : en considérant une section d'une pale (21) sur un plan perpendiculaire à l'axe de rotation (A), l'épaisseur maximale (MT) de ladite section est placée à l'extérieur d'une première circonférence (C1) tracée sur ce plan, intermédiaire entre une deuxième circonférence (C2) tangente au point de cette section le plus proche du susdit axe de rotation (A) et ayant comme centre ledit axe de rotation (A), et une troisième circonférence (C3), concentrique à ladite deuxième circonférence (C2) et tangente au point de cette section le plus éloigné du susdit axe de rotation (A), les trois circonférences (C1, C2, C3) étant concentriques et ayant l'axe de rotation (A) comme centre, **caractérisée en ce que** ladite turbine comprend un tuyau (6), et que le rotor (2) est disposé à l'intérieur du tuyau (6), ledit tuyau (6) ayant un axe (AT) disposé perpendiculairement à l'axe de rotation (A) du rotor (2), la turbine étant configurée de manière à ce que l'entrée et la sortie du fluide du rotor (2) soient essentiellement radiales.

2. Turbine (1) selon la revendication 1, où l'épaisseur moyenne de ladite pale (21) entre la première circonférence (C1) et la troisième circonférence (C3) est supérieure à l'épaisseur moyenne de ladite pale (21) entre ladite première circonférence (C1) et ladite deuxième circonférence (C2).

3. Turbine (1) selon la revendication 1 ou 2, dans laquelle le rayon (r2) de ladite deuxième circonférence (C2) est d'au moins 50% du rayon (r3) de ladite troisième circonférence (C3), de préférence d'au moins 65%.

4. Turbine (1), selon l'une quelconque des revendications précédentes, où, en considérant :
• A1 comme la surface de la section du tuyau (6) le long d'un plan perpendiculaire à la direction du mouvement du fluide et passant par l'axe de rotation du rotor (2),
• A2 comme la surface à l'intérieur du tuyau entre le rotor (2) et le tuyau (6), à travers laquelle le fluide peut passer en contournant le rotor (2), mesurée sur un plan comprenant l'axe de rotation (A) et la direction radiale le long de laquelle la distance minimale (D3) entre le tuyau (6), ou un convoyeur (3) connecté au tuyau (6), et le rotor (2) peut être mesurée ;
la valeur de A2 étant au moins 10 fois inférieure à celle de A1.

5. Turbine (1) selon l'une quelconque des revendications précédentes, comprenant plusieurs convoyeurs (3, 4) disposés au moins en amont du rotor (2), lesdits convoyeurs (3, 4) étant de préférence convergents afin d'accélérer le fluide entrant dans ledit rotor (2) et/ou étant de préférence mobiles.

6. Turbine (1) selon l'une quelconque des revendications précédentes, dans laquelle la turbine (1) a un débit variable, comprenant de préférence un cylindre (5) pouvant se déplacer dans une direction axiale par rapport au susdit axe de rotation (A), de sorte que le rotor puisse être recouvert au moins partiellement afin de faire varier la quantité de fluide qui passe à travers ladite turbine (1).

7. Turbine (1) selon l'une quelconque des revendications précédentes, dans laquelle ledit rotor (2) comprend au moins deux séries (S, S', S") de pales (21), qui sont séparées par un élément de séparation (24) sensiblement planaire et disposé pratiquement perpendiculairement au susdit axe de rotation (A).

8. Turbine (1) selon l'une quelconque des revendications précédentes, où l'angle déphasé des susdites pales (21') est variable en utilisation, de préférence au moyen d'éléments élastiques (21d).

9. Turbine (1) selon l'une quelconque des revendications précédentes, où une surface des pales (21) présente plusieurs rainures, encoches, protubérances ou bosses (21c).

10. Turbine (1) selon l'une quelconque des revendications précédentes, où ledit tuyau a une section sensiblement rectangulaire.

11. Turbine (1) selon l'une quelconque des revendications précédentes, comprenant un élément de ventilation (11) adapté pour éjecter l'air dans le tuyau (6) et disposé en amont du rotor (2), en considérant au moins une direction de circulation dans laquelle un fluide s'écoule dans le tuyau (6) en condition d'utilisation.

12. Installation (100) comprenant un conduit (8) qui, en utilisation, est disposé essentiellement verticalement et est connecté de manière fluidique à une source d'eau (10), de manière à former une colonne d'eau (9) à l'intérieur du susdit conduit vertical, qui monte et descend alternativement dans ce conduit vertical (8) ; ladite installation comprenant une turbine (1) selon l'une quelconque des revendications précédentes, qui est disposée dans ledit conduit vertical (8) au-dessus de cette colonne d'eau, ou qui est disposée essentiellement horizontalement et est connectée de manière fluidique au susdit conduit vertical (8).

13. Installation (100) selon la revendication 12, comprenant un adaptateur (7a) conçu pour connecter le tuyau (6) au conduit vertical (8), de préférence façonné de manière à réduire la section du tuyau (6) en formant une portion convergente.
